**Europäisches Patentamt**

**European Patent Office**

**Office européen des brevets**

(11) Publication number: **0 012 002**
**B1**

# EUROPEAN PATENT SPECIFICATION

(45) Date of publication of patent specification: **24.02.82**

(51) Int. Cl.³: **H 01 C 7/00, H 01 B 1/14**

(21) Application number: **79302692.3**

(22) Date of filing: **26.11.79**

(54) Glaze resistor compositions.

(30) Priority: **25.11.78 JP 145482/78**

(43) Date of publication of application:
**11.06.80 Bulletin 80/12**

(45) Publication of the grant of the patent:
**24.02.82 Bulletin 82/8**

(84) Designated Contracting States:
**DE FR GB**

(56) References cited:
**GB - A - 1 537 645**
**US - A - 4 039 997**

(73) Proprietor: **Matsushita Electric Industrial Co., Ltd.**
**1006, Oaza Kadoma**
**Kadoma-shi Osaka-fu, 571 (JP)**

(72) Inventor: **Hattori, Masumi**
**25-3, 1-chome**
**Kouhoku Hirakata-shi, Osaka-fu (JP)**
Inventor: **Ishida, Toru**
**A3-104, 1081-2, Fujisaka**
**Hirakata-shi, Osaka-fu (JP)**
Inventor: **Tanaka, Shinichi**
**C-403, Rose Mansion 10-1, Hotta-cho, Fukakusa**
**Fushimi-ku Kyoto-shi, Kyoto-fu (JP)**

(74) Representative: **Spencer, Graham Easdale et al,**
**A.A. Thornton & CO Northumberland House 303-306, High Holborn**
**London WC1V 7LE (GB)**

Courier Press, Leamington Spa, England.

## Glaze resistor compositions

The present invention relates to glaze resistor compositions.

Glaze resistor compositions suitable for coating heat-resistant substrates and firing in air to form glaze resistors are well known for example, $RuO_2$, Ag, and Ag-Pd glaze.

Glaze resistor compositions comprising mixtures of several silicides are also known, for example, molybdenum disilicide, molybdenum boride and tungsten disilicide (as disclosed in British Patent Specification 1,263,728), or molybdenum disilicide, tantalum disilicide and a glass frit containing alumina (as disclosed in U.S. Patent 3,027,332). However, such compositions have temperature coefficients of resistivity which are too high for many purposes, relatively unstable resistivity, too high current noise and limited resistivity ranges.

We have now developed a glaze resistor composition having a satisfactory temperature coefficient of resistivity, a high resistivity stability and small current noise and which is usable over a wide resistivity range.

Glaze resistor compositions have been proposed in our British Specification 1,537,645 which consist of at least 50% by weight of a glass frit and up to 50% by weight of a mixture comprising molybdenum disilicide, tantalum disilicide and magnesium silicide. While such compositions have satisfactory temperature coefficients of resistivity, resistivity stability and current noise, it would be desirable to widen the range of resistivity which can be obtained, and, in particular, to enable a resistivity greater than about 40 $k\Omega$/sq to be obtained without deterioration of other properties.

According to the present invention, there is provided a glaze resistor composition which consists of 95 to 50% by weight of a glass frit and 5 to 50% by weight of a mixture comprising molybdenum disilicide, tantalum disilicide, magnesium silicide and aluminium, the molar ratio of molybdenum disilicide plus tantalum disilicide plus magnesium silicide to aluminium being from 90:10 to 50:50, preferably 85:15 to 65:35.

The addition of aluminium to the mixture comprising molybdenum disilicide, tantalum disilicide and magnesium silicide in the composition according to the invention stabilizes the resistivity of the resulting resistor over a wide range of resistivity and improves the temperature coefficient of resistivity, stability under load and current noise. Resistivities greater than 40 $k\Omega$/sq. can be obtained without substantial deterioration of other properties. If the amount of aluminium is greater than that specified above, the resistivity of the resistor increases, but the current noise also increases.

It is preferred that the magnesium silicide is not used in a too large amount, in order to maintain the hydrolytic stability of the composition; it is also preferred that the tantalum disilicide is not used in a too small amount, in order that the homogeneity of a resistor film made from the composition is not impaired by the presence of bubbles therein; and, finally, it is preferred that molybdenum disilicide is not used in a too small amount, in order that the load test stability is not impaired.

As a result of such considerations, it is preferred that the mixture of silicides and aluminium in the composition according to the invention contains the silicides in amounts such that the molar ratio of molybdenum disilicide plus tantalum disilicide to magnesium silicide is from 30:70 to 80:20, more preferably 50:50 to 80:20 and the molar ratio of molybdenum disilicide:tantalum disilicide is from 90:10 to 70:30.

The mixture of silicides and aluminium may be made by mixing suitable amounts of molybdenum, tantalum, magnesium, silicon and aluminium, pressing to tablets of a suitable size, firing the tablets at a temperature of 800° to 1300°C in an inert gas such as argon or in an active gas such as hydrogen, then crushing each fired tablet using a crushing machine, and finally grinding into fine granules, having an average particle size of 0.1 micron, by a ball mill.

Any suitable glass frit may be included in the composition according to the invention, but a preferred glass frit is of barium borate glass, especially one containing niobium oxide ($Nb_2O_5$). Preferred barium borate glasses have the following composition, by weight:

| | |
|---|---|
| BaO | 25 to 55% |
| $B_2O_3$ | 30 to 60% |
| $SiO_2$ | 0 to 10% |
| $Al_2O_3$ | 0 to 16% |
| CaO | 0 to 5% |
| MgO | 0 to 5% |
| $Nb_2O_5$ | 0 to 3% |

The glass frit is necessary for obtaining superior resistance to humidity and heat, ensuring suitable reaction with conductive powder when firing a resistor made from the composition and ensuring uniform distribution of the conductive mixture therein. $SiO_2$, $Al_2O_3$, MgO and CaO components in a glass frit improve its resistance to humidity and heat, while $Nb_2O_5$ improves the distribution of the conductive mixture in glass (which ensures that the resistor has a higher resistivity and good stability characteristics).

Materials suitable for making the glass frits will now be described.

A suitable material for forming BaO is $BaCO_3$, which by firing, is reduced to BaO (and $CO_2$). A suitable material for forming $B_2O_3$ is $H_3BO_3$, which by firing is reduced to $B_2O_3$ (and $H_2O$). A suitable material for forming $Al_2O_3$ is $Al_2O_3$ or

aluminium hydroxide $Al_2(OH)_3$, which by firing is reduced to $Al_2O_3$ (and $H_2O$). A suitable material for forming CaO is $CaCO_3$, which by firing is reduced to CaO (and $CO_2$). $SiO_2$, MgO and $Nb_2O_5$ used are generally provided as the respective oxides. The glass frit may be made as follows: Respective materials for forming the glass are mixed in a ratio e.g. as follows: $BaCO_3$ : $H_3BO_3$ : $SiO_2$ : $Al_2O_3$ : $CaCO_3$ : MgO : $Nb_2O_5 = 34.2 : 51.3 : 3.4 : 6.0 : 2.15 : 2.70 : 0.25$ (in weight %), and the mixed powders are melted at 1200°C for 30 minutes in air in an alumina crucible, whereby glass is formed and the $CO_2$ and $H_2O$ generated is evaporated. Next, the molten glass is cooled and coarsely crushed with water, then ground through a screen mesh of 400 mesh, and finally ground by a ball mill into fine granules, having an average particle size of 3 microns.

A typical method of making a glaze resistor using a glaze resistor composition according to the invention will now be described. The glaze resistor composition including an appropriate amount of glass frit and a suitable organic liquid vehicle (such as terpineol having 10% ethylcellulose dissolved therein) is mixed to a paste. The paste is applied to a refractory substrate such as a ceramic plate, and is then heated or fired in air in, for example, a tunnel furnace, at a temperature such that the glass frit is adequately fused thereto and to form a stable glaze resistor in the form of a film on the refractory substrate.

A typical heating temperature is from 750° to 1000°C, more preferably from 800 to 900°C, for a time of from 3 to 30 minutes. During the heat treatment, the liquid vehicle evaporates off or burns off, and does not substantially affect the resistivity or other characteristics of the resultant glaze resistor.

In order that the invention may be more fully understood, the following Examples are given by way of illustration only. In the Examples, reference will be made to the accompanying drawings, in which:

Figure 1 is a graph showing the relation between the resistivities and temperature coefficients of resistivity of glaze resistors according to the invention.

Figure 2 is a graph showing the relation between the resistivities and current noises of glaze resistors according to the invention; and

Figure 3 is a graph showing the relation between the resistivities and the change of resistivities of glaze resistors according to the invention after a load test.

*Example 1* (not according to the invention)

Sixty different glaze resistor compositions without aluminium (Comparative Samples 1 to 60) were prepared, having the compositions shown in Table 1. Each composition was made as follows:

A mixture of silicides in the form of a powder having an average particle size of 0.2 micron and glass frit was made up in the percentage shown in Table 1 (in which G/M + G represents the percentage, by weight of glass frit, relative to the total weight of the composition). The glass frit used had an average particle size of 3 microns, and was composed of a barium borate glass frit. Each mixture of silicides and the glass frit as well dispersed in an appropriate amount of liquid vehicle to make a paste suitable for screen printing. Each paste was applied on a ceramic substrate by screen printing and dried, followed by heating in air at a temperature of 850°C for 10 minutes to obtain sixty glaze resistors each in the form of a film.

The sheet resistivity R ($\Omega$/sq), temperature coefficient of resistivity TCR (ppm/°C), current noise (dB) and load test characteristics (percent change of resistivity after load test) of each of the sixty resistors were measured. The load test was carried out by applying an electric power of 625mW/mm$^2$ to the glaze resistor for 5 seconds at room temperature, and the load characteristics were calculated from the difference between the resistivities of the glaze resistor before and after the load test divided by the resistivity before the load test.

The results of all these measurements are shown in Table 1. It will be apparent from Table 1 that a wide range of resistivities with small temperature coefficients of resistivity, low current noise and good load test characteristics can be obtained. As the amount of magnesium silicide increases, the resistivity becomes higher, and the temperature coefficient of resistivity increases. However, most of the values of the temperature coefficients of resistivity are less than 200 ppm/°C, except for the case of very low resistivities. The load test characteristics are good, particularly in a lower resistivity range.

However, a disadvantage of the results of this Example 1 is that a resistivity higher than 40 or 50 or 100 k$\Omega$/sq is difficult to obtain without deteriorating other characteristics.

*Example 2* (according to the invention)

Fifty-six different glaze resistor compositions (Samples 61 to 116) were prepared having the composition shown in Table 2 (in which the column headings have the same meanings as in Table 1). Each composition was made as follows:

A mixture of silicides containing aluminium in the form of a powder, having an average particle size of 0.2 micron, and glass frit the same as the glass frit used in Example 1 was made up in the percentage shown in Table 2. Each mixture of silicides containing aluminium and the glass frit was well dispersed in an appropriate amount of liquid vehicle to make a paste suitable for screen printing. Each paste was applied on a ceramic substrate by screen printing and dried, followed by heating in air at a temperature of 850°C for 10 minutes to obtain fifty-six different glaze resistors each in the form of a film.

The sheet resistivity, temperature coefficient of resistivity, current noise and load test characteristics of each of fifty-six resistors were measured in the same manner as in Example 1. The results of the measurements are shown in Table 2.

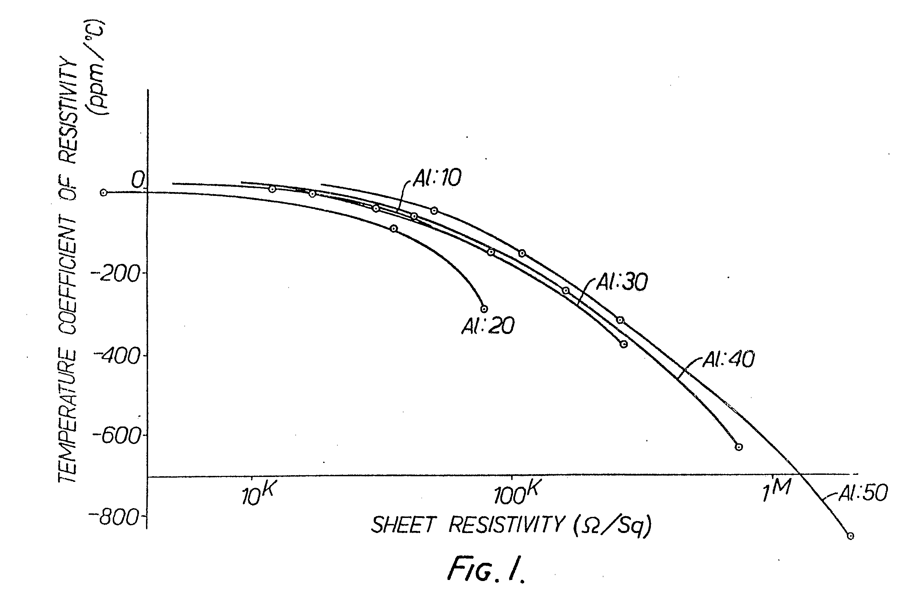

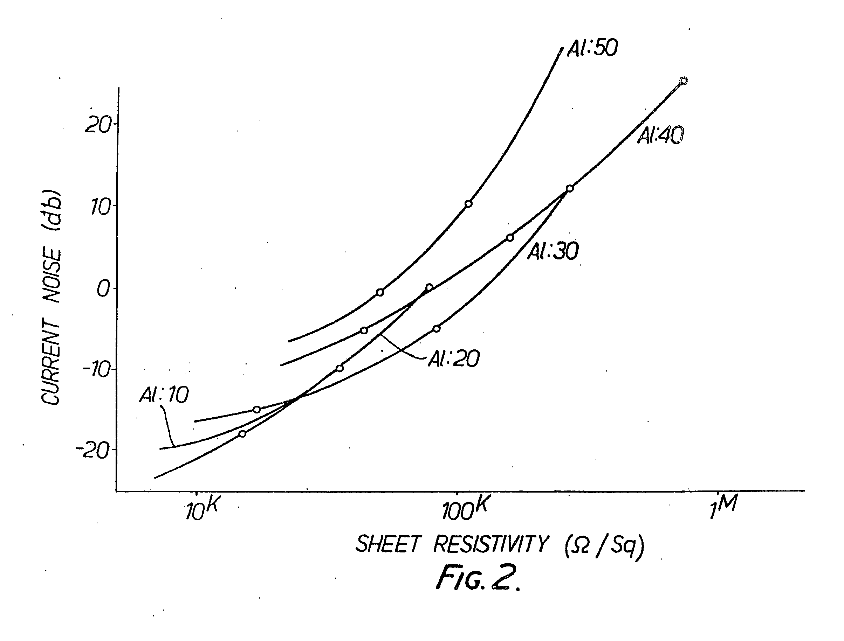

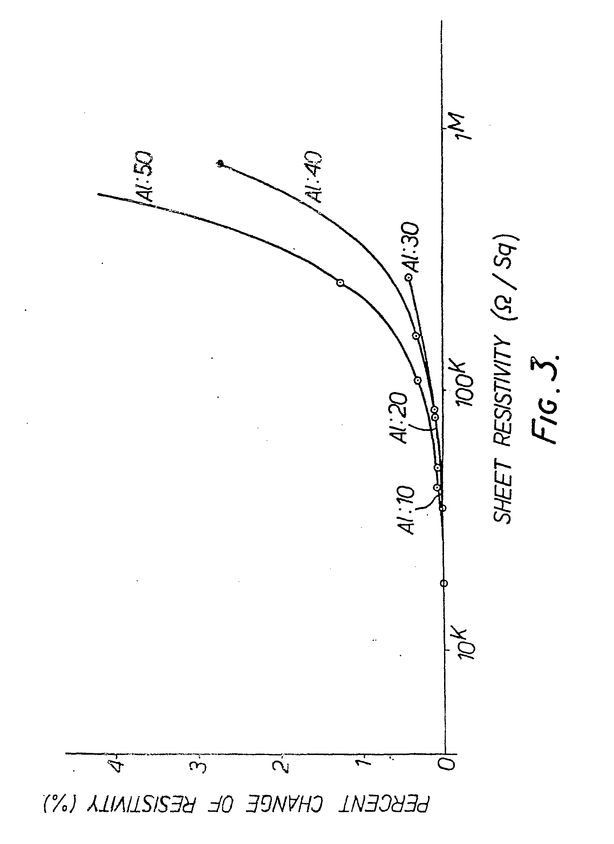

These measured results are also plotted in Figures 1 to 3.

It will be apparent from Table 2 and Figures 1 to 3 that various resistivities in a wide resistivity range, particularly to a higher resistivity than those obtained in Example 1, with small temperature coefficients of resistivity, low current noise and good load test characteristics can be obtained according to the invention.

TABLE 1

| No. | Mg$_2$Si mol % | MoSi$_2$ mol % | TaSi$_2$ mol % | Al mol % | G/M+G weight % | R $\Omega$/sq | TCR ppm/C° | Noise db | Load Test $\Delta$R/R (%) |
|---|---|---|---|---|---|---|---|---|---|
| 1 | 10 | 81 | 9 | — | 93 | 3.0$^k$ | +50 | −15 | 0.1 |
| 2 | | | | | 90 | 700 | +80 | −23 | 0 |
| 3 | | | | | 80 | 120 | +160 | −25 | 0 |
| 4 | | | | | 50 | 15 | +300 | −26 | 0 |
| 5 | 10 | 72 | 18 | — | 93 | 3.2$^k$ | +45 | −14 | 0.15 |
| 6 | | | | | 90 | 950 | +60 | −22 | 0 |
| 7 | | | | | 80 | 160 | +130 | −26 | 0 |
| 8 | | | | | 50 | 17 | +280 | −20 | 0 |
| 9 | 10 | 63 | 27 | — | 93 | 6.5$^k$ | +25 | −10 | 0.15 |
| 10 | | | | | 90 | 2.0$^k$ | +35 | −14 | 0 |
| 11 | | | | | 80 | 250 | +100 | −22 | 0 |
| 12 | | | | | 50 | 23 | +200 | −24 | 0 |
| 13 | 20 | 72 | 3 | — | 93 | 3.8$^k$ | +45 | −15 | 0.12 |
| 14 | | | | | 90 | 1.2$^k$ | +60 | −20 | 0 |
| 15 | | | | | 80 | 200 | +95 | −25 | 0 |
| 16 | | | | | 50 | 18 | +165 | −25 | 0 |
| 17 | 20 | 64 | 16 | — | 93 | 4.1$^k$ | +20 | −14 | 0.10 |
| 18 | | | | | 90 | 1.7$^k$ | +35 | −18 | 0 |
| 19 | | | | | 80 | 220 | +80 | −26 | 0 |
| 20 | | | | | 50 | 20 | +150 | −27 | 0 |
| 21 | 20 | 56 | 24 | — | 93 | 16.0$^k$ | −10 | −6 | 0.21 |
| 22 | | | | | 90 | 5.1$^k$ | 0 | −15 | 0.08 |
| 23 | | | | | 80 | 480 | +15 | −25 | 0 |
| 24 | | | | | 50 | 34 | +50 | −26 | 0 |
| 25 | 40 | 50 | 10 | — | 93 | 13$^k$ | −20 | −1 | 0.5 |
| 26 | | | | | 90 | 4.2$^k$ | −5 | −10 | 0.2 |
| 27 | | | | | 80 | 520 | +10 | −25 | 0 |
| 28 | | | | | 50 | 41 | +72 | −25 | 0 |
| 29 | 40 | 45 | 15 | — | 93 | 18.5$^k$ | +45 | +5 | 0.7 |
| 30 | | | | | 90 | 7.0$^k$ | −30 | −8 | 0.2 |
| 31 | | | | | 80 | 820 | −2 | −25 | 0 |
| 32 | | | | | 50 | 79 | +83 | −26 | 0 |

TABLE 1 (continued)

| No. | $Mg_2Si$ mol % | $MoSi_2$ mol % | $TaSi_2$ mol % | Al mol % | G/M+G weight % | R $\Omega$/sq | TCR ppm/C° | Noise db | Load Test $\Delta R/R$ (%) |
|---|---|---|---|---|---|---|---|---|---|
| 33 | 40 | 35 | 20 | — | 93 | $22^k$ | −78 | +10 | 0.9 |
| 34 | | | | | 90 | $10^k$ | −40 | −17 | 0.4 |
| 35 | | | | | 80 | 970 | −8 | −22 | 0 |
| 36 | | | | | 50 | 102 | +99 | −20 | 0 |
| 37 | 55 | 40 | 5 | — | 93 | $28^k$ | −60 | +5 | 0.42 |
| 38 | | | | | 90 | $8.2^k$ | −11 | −10 | 0.20 |
| 39 | | | | | 80 | 580 | +6 | −25 | 0 |
| 40 | | | | | 50 | ·39 | +90 | −25 | 0 |
| 41 | 55 | 35 | 10 | — | 93 | $32^k$ | −80 | +8 | 0.82 |
| 42 | | | | | 90 | $10^k$ | −20 | −12 | 0.18 |
| 43 | | | | | 80 | 708 | +2 | −21 | 0 |
| 44 | | | | | 50 | 45 | +85 | −20 | 0 |
| 45 | 55 | 30 | 15 | — | 93 | $42^k$ | −100 | +15 | 1.20 |
| 46 | | | | | 90 | $13^k$ | −32 | −10 | 0.43 |
| 47 | | | | | 80 | $1.02^k$ | −13 | −18 | 0 |
| 48 | | | | | 50 | 86 | −72 | −23 | 0 |
| 49 | 70 | 27 | 3 | — | 93 | $41^k$ | −50 | +10 | 2.1 |
| 50 | | | | | 90 | $15^k$ | 015 | −6 | 0.80 |
| 51 | | | | | 80 | 900 | −10 | −11 | 0 |
| 52 | | | | | 50 | 42 | +60 | −25 | 0 |
| 53 | 70 | 24 | 6 | — | 93 | $51^k$ | −75 | +13 | 3.0 |
| 54 | | | | | 90 | $17^k$ | −20 | −2 | 0.32 |
| 55 | | | | | 80 | 930 | −15 | −7 | 0 |
| 56 | | | | | 50 | 51 | +55 | −25 | 0 |
| 57 | 70 | 21 | 9 | — | 93 | $71^k$ | −120 | +19 | 5.5 |
| 58 | | | | | 90 | $20^k$ | −30 | +2 | 0.50 |
| 59 | | | | | 80 | $1.0^k$ | −20 | −7 | 0 |
| 60 | | | | | 50 | 55 | +43 | −26 | 0 |

TABLE 2

| No. | Mg₂Si mol % | MoSi₂ mol % | TaSi₂ mol % | Al mol % | G/M+G weight % | R Ω/sq | TCR ppm/C° | Noise db | Load Test ΔR/R (%) |
|---|---|---|---|---|---|---|---|---|---|
| 61 | 40 | 40 | 10 | 10 | 95 | 42k | −150 | −8 | 0.07 |
| 62 | | | | | 90 | 18$^k$ | −80 | −15 | 0 |
| 63 | | | | | 80 | 2.2$^k$ | +5 | −25 | 0 |
| 64 | | | | | 50 | 430 | +17 | −25 | 0 |
| 65 | 30 | 48 | 12 | 10 | 95 | 35$^k$ | −100 | −10 | 0.07 |
| 66 | | | | | 90 | 15$^k$ | −25 | −18 | 0 |
| 67 | | | | | 80 | 1.8$^k$ | +10 | −25 | 0 |
| 68 | | | | | 50 | 370 | +25 | −25 | 0 |
| 69 | 20 | 56 | 14 | 10 | 95 | 30$^k$ | −50 | −12 | 0.03 |
| 70 | | | | | 90 | 12$^k$ | −5 | −20 | 0 |
| 71 | | | | | 80 | 1.2$^k$ | +23 | −25 | 0 |
| 72 | | | | | 50 | 400 | +31 | −25 | 0 |
| 73 | 40 | 32 | 8 | 20 | 95 | 78$^k$ | −290 | 0 | 0.09 |
| 74 | | | | | 90 | 35$^k$ | −100 | −10 | 0 |
| 75 | | | | | 80 | 2.7$^k$ | −10 | −20 | 0 |
| 76 | | | | | 50 | 170 | +2 | −25 | 0 |
| 77 | 30 | 40 | 10 | 20 | 95 | 63$^k$ | −236 | −2 | 0.05 |
| 78 | | | | | 90 | 31$^k$ | −78 | −13 | 0 |
| 79 | | | | | 80 | 2.2$^k$ | −2 | −20 | 0 |
| 80 | | | | | 50 | 152 | +13 | −25 | 0 |
| 81 | 20 | 48 | 12 | 20 | 95 | 55$^k$ | −184 | −5 | 0.06 |
| 82 | | | | | 90 | 26$^k$ | −47 | −15 | 0 |
| 83 | | | | | 80 | 1.9$^k$ | +3 | −23 | 0 |
| 84 | | | | | 50 | 130 | +22 | −25 | 0 |
| 85 | 40 | 24 | 6 | 30 | 95 | 350$^k$ | −470 | +15 | 0.47 |
| 86 | | | | | 90 | 108$^k$ | −190 | −2 | 0.15 |
| 87 | | | | | 80 | 23$^k$ | −20 | −12 | 0 |
| 88 | | | | | 50 | 850 | +4 | −20 | 0 |
| 89 | 30 | 32 | 8 | 30 | 95 | 302$^k$ | −400 | +13 | 0.40 |
| 90 | | | | | 90 | 98$^k$ | −160 | −3 | 0.12 |
| 91 | | | | | 80 | 20$^k$ | −0.5 | −13 | 0 |
| 92 | | | | | 50 | 720 | +3 | −20 | 0 |

TABLE 2 (continued)

| No. | Mg$_2$Si mol % | MoSi$_2$ mol % | TaSi$_2$ mol % | Al mol % | G/M+G weight % | R Ω/sq | TCR ppm/C° | Noise db | Load Test ΔR/R (%) |
|---|---|---|---|---|---|---|---|---|---|
| 93 | 20 | 40 | 10 | 30 | 95 | 270$^k$ | −380 | +20 | 0.40 |
| 94 | | | | | 90 | 83$^k$ | −157 | −5 | 0.10 |
| 95 | | | | | 80 | 17$^k$ | −18 | −15 | 0 |
| 96 | | | | | 50 | 560 | +12 | −23 | 0 |
| 97 | 40 | 16 | 4 | 40 | 95 | 1.1$^M$ | −700 | +25< | 3.50 |
| 98 | | | | | 90 | 210$^k$ | −300 | +10 | 0.50 |
| 99 | | | | | 80 | 53$^k$ | −150 | +7 | 0.10 |
| 100 | | | | | 50 | 2.4$^k$ | −3 | −20 | 0 |
| 101 | 30 | 24 | 6 | 40 | 95 | 740$^k$ | −630 | +25 | 2.70 |
| 102 | | | | | 90 | 160$^k$ | −252 | +6 | 0.30 |
| 103 | | | | | 80 | 42$^k$ | −70 | −5 | 0.05 |
| 104 | | | | | 50 | 1.6$^k$ | +7 | −23 | 0 |
| 105 | 20 | 32 | 8 | 40 | 95 | 630$^k$ | −605 | +25 | 1.80 |
| 106 | | | | | 90 | 97$^k$ | −156 | +2 | 0.35 |
| 107 | | | | | 80 | 23$^k$ | −17 | −10 | 0.05 |
| 108 | | | | | 50 | 1.1$^k$ | +13 | −25 | 0 |
| 109 | 30 | 16 | 4 | 50 | 95 | 3.4$^M$ | −1000 | +25< | 15.6 |
| 110 | | | | | 90 | 450$^k$ | −500 | +25< | 4.5 |
| 111 | | | | | 80 | 180$^k$ | −160 | +13 | 0.75 |
| 112 | | | | | 50 | 58$^k$ | −60 | 0 | 0.1 |
| 113 | 20 | 20 | 10 | 50 | 95 | 1.8$^M$ | −850 | +25< | 12 |
| 114 | | | | | 90 | 260$^k$ | −320 | +25< | 1.25 |
| 115 | | | | | 80 | 110$^k$ | −160 | +10 | 0.3 |
| 116 | | | | | 50 | 51$^k$ | −60 | −0.5 | 0.05 |

## Claims

1. A glaze resistor composition which consists of at least 50% by weight of a glass frit and up to 50% by weight of a mixture comprising molybdenum disilicide, tantalum disilicide and magnesium silicide, characterised in that said mixture contains aluminium in an amount such that the molar ratio of molybdenum disilicide plus tantalum disilicide plus magnesium silicide to aluminium is from 90:10 to 50:50, the amount of the glass frit being up to 95% by weight of the composition.

2. A glaze resistor composition according to claim 1, characterised in that the molar ratio of molybdenum disilicide plus tantalum disilicide to magnesium silicide is from 30:70 to 80:20.

3. A glaze resistor composition according to claim 1 or 2, characterised in that the molar ratio of molybdenum disilicide to tantalum disilicide is from 90:10 to 70:30.

4. A glaze resistor composition according to any of claims 1 to 3, characterised in that the molar ratio of molybdenum disilicide plus tantalum disilicide plus magnesium silicide to aluminium is from 85:15 to 65:35.

5. A glaze resistor composition according to any one of claims 1 to 4, characterised in that the glass frit is of a barium borate glass.

6. A glaze resistor composition according to claim 5 characterised in that the glass contains niobium oxide.

7. A glaze resistor composition according to claim 6, characterised in that the amount of niobium oxide in the glass frit is not more than 3% by weight.

## Revendications

1. Composition d'émail résistif constituée d'au moins 50% en poids d'une fritte de verre et jusqu'à 50% en poids d'un mélange comprenant du disiliciure de molybdène, du disiliciure de tantale et du siliciure de magnésium, caractérisée en ce que ledit mélange contient de l'aluminium en une quantité telle que le rapport molaire de la somme du disiliciure de molybdène, du disiliciure de tantale et du siliciure de magnésium à l'aluminium soit de 90:10 à 50:50, la quantité de la fritte de verre étant au plus égale à 95% du poids de la composition.

2. Composition d'émail résistif selon la revendication 1, caractérisée en ce que le rapport molaire de la somme du disiliciure de molybdène et du disiliciure de tantale au siliciure de magnésium est de 30:70 à 80:20.

3. Composition d'émail résistif selon l'une des revendications 1 ou 2, caractérisée en ce que le rapport molaire du disiliciure de molybdène au disiliciure de tantale est de 90:10 à 70:30.

4. Composition d'émail résistif selon l'une quelconque des revendications 1 à 3, caractérisée en ce que le rapport molaire de la somme du disiliciure de molybdène, du disiliciure de tantale et du siliciure de magnésium à l'aluminium est de 85:15 à 65:35.

5. Composition d'émail résistif selon l'une quelconque des revendications 1 à 4, caractérisée en ce que la fritte de verre est faite de verre au borate de baryum.

6. Composition d'émail résistif selon la revendication 5, caractérisée en ce que le verre contient de l'oxyde de niobium.

7. Composition d'émail résistif selon la revendication 6, caractérisée en ce que la quantité d'oydè de niobium dans la fritte de verre ne dépasse pas 3% en poids.

## Patentansprüche

1. Widerstandsglasurmasse, bestehend aus mindestens 50 Gew.-% Glasfritte und bis zu 50 Gew.-% eines Gemischs aus Molybdändisilicid, Tantaldisilicid und Magnesiumsilicid, dadurch gekennzeichnet, das dieses Gemisch Aluminium in einer solchen Menge enthält, dass das Molverhältnis von Molybdändisilicid plus Tantaldisilicid plus Magnesiumsilicid zu Aluminium 90:10 bis 50:50 beträgt, wobei sich die Menge Glasfritte bis auf 95 Gew.-% der Masse beläuft.

2. Widerstandsglasurmasse nach Anspruch 1, dadurch gekennzeichnet, dass das Molverhältnis von Molybdändisilicid plus Tantaldisilicid zu Magnesiumsilicid 30:70 bis 80:20 beträgt.

3. Widerstandsglasurmasse nach Anspruch 1 oder 2, dadurch gekennzeichnet, dass das Molverhältnis von Molybdändisilicid zu Tantaldisilicid 90:10 bis 70:30 beträgt.

4. Widerstandsglasurmasse nach einem der Ansprüche 1 bis 3, dadurch gekennzeichnet, dass das Molverhältnis von Molybdändisilicid plus Tantaldisilicid plus Magnesiumsilicid zu Aluminium 85:15 bis 65:35 beträgt.

5. Widerstandsglasurmasse nach einem der Ansprüche 1 bis 4, dadurch gekennzeichnet, dass die Glasfritte aus Bariumboratglas besteht.

6. Widerstandsglasurmasse nach Anspruch 5, dadurch gekennzeichnet, dass das Glas Nioboxyd enthält.

7. Widerstandsglasurmasse nach Anspruch 6, dadurch gekennzeichnet, dass die Menge Nioboxyd in der Glasfritte 3 Gew.-% nicht übersteigt.

FIG. 1.

FIG. 2.

PERCENT CHANGE OF RESISTIVITY (%)

SHEET RESISTIVITY (Ω / Sq)

Al:10 Al:20 Al:30 Al:40 Al:50

10K 100K 1M

FIG. 3.